# EUROPÄISCHE PATENTSCHRIFT

(11) **EP 2 725 051 B1**
(45) Veröffentlichungstag und Bekanntmachung des Hinweises auf die Patenterteilung: **11.03.2015**
(21) Anmeldenummer: 12189540.3
(22) Anmeldetag: 23.10.2012
(51) Int. Cl.: C08G 69/14

(54) **Kontinuierliches Verfahren zur Herstellung von Polyamid 6 und Vorrichtungen hierzu**
Continuous process for the preparation of polyamide 6 and devices for this
Procédé de fabrication continue de polyamide 6 et dispositifs à cet effet

(43) Veröffentlichungstag der Anmeldung: 30.04.2014
(73) Patentinhaber: Uhde Inventa-Fischer GmbH, 13509 Berlin (DE)
(72) Erfinder: Janzi, Viktor, 7403 Rhäzüns (CH)
(74) Vertreter: Pfenning, Meinig & Partner GbR

(56) Entgegenhaltungen:
- EP-A1- 0 459 206
- EP-B1- 0 847 414

## Beschreibung

Die Erfindung betrifft ein Verfahren zur kontinuierlichen Herstellung von textilem Polyamid 6 aus ε-Caprolactam unter Verwendung von Oligomeren enthaltenden Rücklactam aus den Extraktionsstufen. Beim erfindungsgemäßen Verfahren wird das Extraktwasser aus einer kontinuierlichen Eindampfstufe in einer gezielten Weise über mehrere Stufen behandelt. Es erfolgt eine Aufkonzentrierung des Extraktwassers durch Verdampfung von überschüssigem Wasser, Starten der Ringöffnungs- und Polyadditions-Reaktionen und Abbau der Oligomeren, so dass ein Oligomerenanteil, nach der Zugabe von Frischlactam und Additiven am Ende der dritten Stufe von max. 0,7 Gew.-% erreicht wird. Danach wird das Polymer/Caprolactam und Additivgemisch dem finalen Polymerisationsreaktor (VK-Rohr) zugeführt. Wichtig ist dabei, dass der Anfangs-Oligomerengehalt am Eintritt des VK-Rohrs deutlich unter dem Gleichgewichtswert von ca. 0,85 Gew.-% liegt. Somit baut sich der Oligomerengehalt im VK-Rohr während der vornehmlichen Polykondensationsreaktion auf einen Wert von 0,65 Gew.-% im finalen Polymer auf. Die Erfindung betrifft weiterhin eine Vorrichtung zur Durchführung eines derartigen Verfahrens sowie die Verwendung von derart hergestelltem Polyamid 6 für POY-Filamente.

Im Stand der Technik sind Verfahren zur Herstellung von Polyamid 6 unter Verwendung von Extraktwassern aus der PA6-Herstellung und Zugabe von Frischlactam bekannt. So wird in der EP 0 459 206 A1 ein Verfahren vorgeschlagen, bei dem das Extraktwasser einer hydrolytischen Druck- und Temperaturstufe unterzogen wird bevor es der Polymerisation zugeführt wird. Bei dem Verfahren nach dieser Offenlegungsschrift wird (Beispiel 1) so vorgegangen, dass das Extraktwasser in einem ersten Schritt konzentriert wird und dass dann in einer weiteren Stufe in einem Autoklaven über eine Zeitspanne von vier Stunden eine Behandlung durchgeführt wird, die dazu führt, dass eine Mischung mit 1,3 % zyclischen Dimer erhalten wird. Das Verfahren nach der EP 0 459 206 A1 ist somit verfahrenstechnisch aufwendig, da mit einem Autoklaven gearbeitet werden muss und zum anderen ist der in dem Extraktwasser erhaltene Anteil an zyclischem Dimer für die Herstellung von hochwertigen Polyamidprodukten z.B. von Polyamidgarnen zu groß. Auch ist das Verfahren nach der EP 0 459 206 A1 kostenaufwendig.

Ein anderes Verfahren zur Herstellung von Polyamid 6 bei dem Extraktwasser aus der PA6-Produktion verwendet wird, ist in der EP 0 847 414 B1 offenbart. Die EP 0 847 414 B1 beschreibt ein zweistufiges Verfahren, wobei sowohl die erste und die zweite Stufe als Druckstufe ausgebildet sind. Bei diesem Verfahren wird dem Lactam/Oligomeren-Gemisch bereits in der ersten Stufe Frischlactam zugeführt (siehe Beispiel 1 sowie Figur). Dadurch wird nicht nur ein aufwändiger apparativer Aufwand erforderlich, um ein derartiges Verfahren durchzuführen, sondern der Oligomerengehalt des Rücklactams kann auch nicht soweit reduziert werden, dass eine Herstellung von POY-Garnen möglich ist.

Ausgehend hiervon ist deshalb die Aufgabe der vorliegenden Erfindung, ein Verfahren und eine Vorrichtung bereitzustellen, mit dem eine Herstellung von Polyamid 6 unter Verwendung von Rücklactam möglich ist, wobei das Verfahrensprodukt trotz Rückführung des Extraktwassers eine so gute Qualität aufweisen muss, dass es für POY-Filamente verwendet werden kann. Das Verfahren soll zudem apparativ nicht sehr aufwändig sein und aus energetischer Sicht soll die Verfahrensführung so ausgelegt sein, dass eine möglichst hohe Energieersparnis gegenüber dem Verfahren des Standes der Technik erreicht wird.

Die Erfindung wird in Bezug auf das Verfahren durch die Merkmale des Patentanspruches 1 und in Bezug auf die Vorrichtung durch die Merkmale des Patentanspruches 14 gelöst. Die Unteransprüche zeigen vorteilhafte Weiterentwicklungen auf. Anspruch 13 gibt eine erfindungsgemäße Verwendung an.

Das erfindungsgemäße Verfahren zur Herstellung von Polyamid 6 aus ε-Caprolactam unter Verwendung von oligomeren enthaltendem Rücklactam zeichnet sich dadurch aus, dass in einem mehrstufigen Prozess der Oligomerenanteil im Extraktwasser soweit reduziert wird, dass vor dem VK-Rohr maximal ein Oligomerenanteil von 0,7 Gew.-% vorliegt.

Nachfolgend beziehen sich alle Angaben in Gew.-% auf das gesamte Extraktwasser, sofern nicht etwas anderes angegeben ist.

Unter Oligomeren im Sinne der Erfindung werden Oligomere verstanden die sich in der Extraktion durch den Waschprozess aus dem PA6-Granulat herauslösen lassen, d.h. sowohl Dimere (n=2), Trimere (n=3) wie auch Tetramere (n=4) und nennenswert Oligomere bis zu n=9. Die Analyse kann mittels der HPLC-Methode (engl. High Pressure Liquid Chromatography) erfolgen.

Beim erfindungsgemäßen Verfahren wird in der letzten Stufe das niederviskose Vorpolymer, das bereits auf einen Oligomerenanteil von 1.5 Gew.-% reduziert worden ist, direkt vor der Polykondensation in der Homogenisierungsstufe intensiv mit Frischlactam und Additiven vermischt. Die Vermischung mit dem Frischlactam und den Additiven wird über eine Verhältnisregelung in einem konstanten Mengenverhältnis durchgeführt, so dass der Oligomerenanteil dann bei maximal 0,7 Gew.-% liegt. Eine derartige Mischung wird dann einem Polykondensationsprozess zugeführt. Die Erfinder konnten dabei zeigen, dass dann ein Polyamid 6 erhalten wird, das maximal einen Oligomerenanteil von 0,8 Gew.-% aufweist. Damit eignet sich dieses Polyamid 6 Polymer ausgezeichnet zur Herstellung von textilen Filamenten, insbesondere von High Performance POY-Filamenten.

Ein wesentliches Element der Erfindung besteht darin, dass durch die Zugabe des Frischlactams erst direkt vor der Polykondensation ein Polymer entsteht, dessen CD-Gehalt nur geringfügig über dem CD-Gehalt eines Polymers liegt, welches aus Frischlactam (VLP®)produziert wurde. Damit sind gegenüber Konkurrenzverfahren erhebliche Kostenvorteile verbunden.

Das erfindungsgemäße Verfahren zeichnet sich dabei dadurch aus, dass für die Behandlung des Extraktwassers eine mehrstufige, in Prozessrichtung aufeinanderfolgende Behandlung - wie nachfolgend näher beschrieben - durchgeführt wird.

Das Extraktwasser, das der ersten Stufe, in der Regel eine 4-stufige Eindampfanlage mit modernen Fallfilmverdampfern, zugeführt wird, kann dabei bis zu 92 Gew.-%, bevorzugt 88 Gew.-% Wasser enthalten. Während der ersten Stufe wird dabei der Wasseranteil auf maximal 35 Gew.-% reduziert, sodass das aus der Eindampfstufe kommende Extraktwasser 65 Gew.-% Lactam und Oligomere enthält. Bevorzugt beträgt der Wasseranteil 25 bis 30 Gew.-%. Am Austritt der Eindampfung stellt sich ein Oligomerenanteil von 4,9 Gew.-% im aufkonzentrierten Extraktwasser bzw. 7,0 Gew.-% in der organischen Substanz ein. In der Eindampfung in der ersten Stufe wird nur der Wassergehalt im Extraktwasser reduziert, es erfolgt bei den niedrig angesetzten Temperaturen von 110 bis 130 °C noch keine relevante chemische Reaktion.

Das aus der ersten Stufe kommende Extraktwasser, das die vorstehend angegebene Zusammensetzung aufweist, wird dann, bevorzugt über einen Strömungsregler in eine zweite Behandlungsstufe, den Konzentrator, geführt. Die zweite Behandlungsstufe ist als Druckstufe ausgebildet und wird bei Drücken von 3 bis 8 bar, bevorzugt von 4 bis 6 bar durchgeführt. Die Temperaturen, die bei der ersten Druckstufe eingehalten werden, liegen im Bereich von 225 bis 255° C, bevorzugt im Bereich von 230 bis 240° C. Die Behandlungsdauer in der zweiten Stufe liegt bevorzugt im Bereich von 3 bis 6 Stunden, bevorzugt von 4 bis 5 Stunden. Dies führt dann zu einem ersten Abbau an Oligomeren. Vorteilhaft ist es dabei, wenn in dieser Stufe die Mischung gerührt wird (CSTR) und die Beheizung mit einer innen liegenden Rohrbeheizung erfolgt.

Die aus dieser zweiten Stufe erhaltene Mischung wird dann direkt bevorzugt über einen Strömungsregler in die dritte Stufe (Vorpolymerisator), die ebenfalls als Druckstufe ausgebildet ist, geführt. In der dritten Stufe wird die aus der zweiten Stufe erhaltene Mischung bei 240 bis 265 °C, bevorzugt von 250 bis 260 °C, und einem Druck von 3 bis 8 bar, bevorzugt 4 bis 6 bar, über eine Zeitspanne von 8 bis 14 Stunden, bevorzugt bei 10-12 h, behandelt. Dies führt dann dazu, dass der Oligomerenanteil auf max. 1,5 Gew.-% sinkt.

Die nächste Stufe des erfindungsgemäßen Verfahrens sieht dann vor, dass das aus der dritten Stufe erhaltene niederviskose Re-Polymer für textile Anwendungen, mit High Performance Additiven und Titandioxid und dem Frischlactam in der Stufe d) einer intensiven Durchmischung (Homogenisierung) unterzogen wird. Für spezielle Anwendungen können auch Verarbeitungs- und Hitzestabilisatoren, Prozesshilfsmittel, Modifikatoren und Lichtstabilisatoren, sowie Katalysatoren zugegeben werden. Bei dieser Homogenisierung wird die aus der dritten Stufe erhaltene Mischung mit Frischlactam vermischt und zwar in einem Verhältnis, das dazu führt, dass der Oligomerenanteil auf max. 0,5 Gew.-% sinkt. In Folge dessen wird dann, wenn der Oligomerenanteil in der dritten Stufe bei 1,5 Gew.-% liegt, die dreifache Menge an Frischlactam zungefügt, sodass letztlich eine Mischung resultiert, die max. 0,5 Gew.-% Oligomere enthält.

Beim erfindungsgemäßen Verfahren ist besonders hervorzuheben, dass es durch die beschriebene Verfahrensweise möglich ist, dass Frischlactam, das in der Homogenisierungsstufe (Stufe d)) zugeführt wird, vorher auf eine Temperatur von 220 bis 230 °C vorgewärmt wird. Auf diese Weise ist der Temperaturunterschied der einzelnen Komponenten, die bei der Homogenisierung zusammengemischt werden, nicht groß, sodass die Risiken des plötzlichen Verdampfens des Restwassers ("Flashing") und des Einfrieren des Produktstroms vollständig beseitigt werden. In dieser Stufe können bei der Homogenisierung noch die zuvor genannten Additive, die dem Fachmann der PA-Chemie bekannt sind, zugeführt werden.

Diese Mischung, die wie vorstehend beschrieben behandelt worden ist, wird dann in einem letzten Schritt einem VK-Rohr zugeführt. Es hat sich dabei gezeigt, dass ein Polyamid 6 Polymer, dass nach einem derartigen Verfahren hergestellt wird, lediglich einen Oligomerenanteil von max. 0,65 Gew.-% aufweist. Dadurch kann das beschriebene Verfahren bei allen Polyamid 6-Anwendungen verwendet werden, besonders für Textil (High Performance Polymer), technische Garne, Teppichgarne, Engineering Plastics und auch Filme.

In Bezug auf die Verfahrensbedingungen im Polymerisationsreaktor kann auf den Stand der Technik verwiesen werden. Beim erfindungsgemäßen Verfahren wird bevorzugt für die Polymerisation mit einem zylindrischen Rohr gearbeitet, das als VK-Rohr bezeichnet wird. Bei der Polykondensation wird dabei bevorzugt eine Temperatur von 230 bis 280 °C, bevorzugt 240 bis 260 °C, eingehalten und eine Zeitspanne von 16 bis 22 Stunden, bevorzugt 18 bis 20 Stunden.

Das VK-Rohr ist bevorzugt einstufig ausgebildet. Das einstufige VK Rohr weist ein spezielles Temperaturprofil auf, welches zu einem tiefen CD-Gehalt und Extraktgehalt im Polymer führt. Es kann drucklos oder auch als Druckstufe ausgebildet sein.

Es ist weiter bevorzugt, dass das erfindungsgemäße Verfahren weiterhin eine Reinigungsstufe aufweist, in der anorganische Substanzen abgetrennt werden. Hierbei handelt es sich insbesondere um Si, Mn, P, Al oder andere Elemente, die vorwiegend über das Mattierungsmittel Titandioxid (TiO₂) in den Prozess eingetragen werden. Die Reinigungsstufe weist dabei vorzugsweise lonenaustauscher auf, die das Extraktwasser von den genannten anorganischen Substanzen befreit. Dieser Schritt wird häufig auch als Demineralisierung bezeichnet.

Vorzugsweise wird das in Stufe e) erzeugte Polyamid 6 in einem Granulator granuliert, einer Extraktionskolonne (extraction tower) zugeführt und mit heißem demineralisiertem Wasser das Extrakt aus dem Granulat ausgewaschen, wobei das bei diesem Extraktionsprozess anfallende Extraktwasser anschließend der Stufe a) zugeführt wird. Das extrahierte Granulat selbst wird dann in einem Trockner (drying tower) bis zur gewünschten Restfeuchte getrocknet und das "Fertige PA6-Granulat" (final PA6-chips) kann dann in Granulat-Silos zwischengelagert oder direkt der Spinnerei (high speed spinning) zum Spinnen von PA6-POY Filamenten (pre oriented yarn) zugeführt werden.

Die Erfindung betrifft weiterhin eine Vorrichtung zur Durchführung eines Verfahrens wie vorstehend beschrieben. Die erfindungsgemäße Vorrichtung zeichnet sich dadurch aus, dass einem VK-Rohr als Polymerisationsreaktor eine mehrstufige Repolymerisationsstufe vorgeschaltet ist. Die Repolymerisationsstufe weist aufeinanderfolgend, in Prozessrichtung, mindestens eine Eindampfvorrichtung, mindestens einen ersten Druckreaktor (CSTR), mindestens einen zweiten Druckreaktor (Plugflow) sowie eine zwischen dem zweiten Druckreaktor und dem VK-Rohr angeordnete Mischvorrichtung auf.

Als Eindampfvorrichtung im Sinne der Erfindung können alle im Stand der Technik hierfür bekannten Vorrichtungen eingesetzt werden. Bevorzugt ist die erfindungsgemäße Eindampfvorrichtung als mehrstufige, bevorzugt 4-stufige, Fallfilmeindampfung mit oder ohne Brüdenverdichtung, ausgebildet.

Der erste Druckreaktor, der als Konzentrator fungiert, ist bevorzugt als zylindrischer Druckbehälter ausgebildet. Der Druckbehälter ist außen mit Halbrohr-Heizschlangen ausgebildet und er weist innenliegende Heizschlangen und ein Rührelement auf.

Der erste Druckreaktor - wie vorstehend beschrieben - ist bei der erfindungsgemäßen Vorrichtung direkt bevorzugt über einen Strömungsregler mit dem zweiten Druckreaktor verbunden. Der zweite Druckreaktor ist wieder als zylindrischer Druckbehälter ausgebildet. Bevorzugt ist der zylindrische Druckbehälter im Bodenbereich konisch zulaufend, sodass ein optimaler Weitertransport der Mischung in die nächste Stufe erreicht werden kann. Der zweite Druckreaktor kann dabei noch in bevorzugter Weise mit Strömungseinbauten versehen sein. Derartige Strömungseinbauten dienen dazu eine Vergleichmäßigung der Mischung und eine gleichmäßige Verweilzeitverteilung zu erreichen.

Da im ersten Druckreaktor das überschüssige Wasser von anfänglich maximal 35 Gew.-% bis zum Gleichgewicht von ca. 2 Gew.-% verdampft werden muss und auch aus dem Vorpolymerisator noch Wasser freigesetzt wird, müssen diese Brüden aus den Druckreaktoren entfernt werden. Dazu sind beide Druckreaktoren bevorzugt mit einer Rektifikationskolonne verbunden. Gemäß der vorliegenden Erfindung ist es daher möglich, dass sowohl der erste und der zweite Druckreaktor jeweils eine separate Kolonne besitzen wie auch dass beide Druckreaktoren mit einer einzigen Kolonne verbunden sind. Die zweite Variante ist aufgrund von Kostenvorteilen zu bevorzugen.

Bei der erfindungsgemäßen Vorrichtung ist die für die Homogenisierung eingesetzte Mischvorrichtung vorzugsweise mit dem Boden des zweiten Druckreaktors verbunden. Der Homogenisierungsreaktor kann als Mixingtank oder als statisches Mischersystem mit mindestens einem Mischer ausgebildet sein. Die Mischvorrichtung ist bevorzugt beheizt und führt aufgrund seiner Ausgestaltung - wie vorstehend beschrieben - zu einer vollständigen Vermischung und Homogenisierung bei kurzen Verweilzeiten. Die Mischvorrichtung kann auch noch mit einem weiteren Eingang zur Zugabe von Additiven verbunden sein.

Die Mischvorrichtung ist gemäß der vorliegenden Erfindung bevorzugt mit dem Kopf des Polymerisationsreaktors, also des VK-Rohrs verbunden. Das homogene Gemisch wird über einen Regler in das VK-Rohr abgelassen und der Druck in der Mischvorrichtung wird geregelt, indem der Überdruck in die Kolonne des VK-Rohres abgelassen wird.

Der Polymerisationsreaktor ist als zylindrisches Rohr ausgebildet. Derartige zylindrische Reaktoren in Rohrform werden auch als VK-Rohre bezeichnet. Dieses VK-Rohr kann dabei drucklos aber auch als Druckstufe ausgebildet sein. Das VK-Rohr ist ebenfalls bevorzugt beheizbar und weist vorzugsweise im Kopfbereich ein Rührelement auf. Vorzugsweise ist das VK-Rohr einstufig ausgebildet.

Die Repolymerisationsstufe kann sowohl aus einer Prozesslinie, die alleine mit Frischlaktam arbeitet, als auch aus einer Prozesslinie, die mit Frischlaktam und Rücklaktam arbeitet, stammen. Besonders bevorzugt ist es dabei, wenn das Extraktwasser von insgesamt drei gleich großen Prozesslinien, wovon zwei mit Frischlaktam arbeiten (VLP®) und die dritte mit dem Extraktwasser aus einer Prozesslinie, die mit Frischlaktam und Rücklaktam arbeitet (OPRP®), zusammengeführt wird.

Die Prozessparameter und Anlagenparameter, welche zuvor in dieser Beschreibung aufgeführt sind, basieren auf maximal insgesamt 3 Linien mit identischer Kapazität. Diese Konfiguration von 3 gleichgroßen Linien, zwei Linien mit Frischlaktam (sog. Virgin Lactam Process (VLP®)) und einer Linie mit Frischlaktam und Rücklatam (sog. Over Proportional Refeeding Process (OPRP®)) bildet die obere Grenze für die Produktion von textilem POY. Günstiger wird es bei insgesamt zwei gleichgroßen Linien, einer Linie mit Frischlaktam (VLP®) und einer Linie mit Frischlaktam und Rücklaktam (OPRP®). Die untere Grenze bildet der sog. Direkt Refeeding Process (DRP®), bei welchem der Produktionslinie das eigene Extraktwasser wieder zugegeben wird.

Die Vorteile des erfindungsgemäßen Verfahrens und auch der Vorrichtung sind darin zu sehen, dass es durch die gezielte Anordnung der einzelnen Apparaturen der Repolymerisationsstufe möglich ist, die gesamte Repolymerisation sehr klein auszubilden, da ja das Frischlactam erst später zugeführt wird, was zu geringen Investitionskosten führt. Die Vorrichtung und auch das Verfahren nach der Erfindung zeichnet sich durch eine hohe Energieeinsparnis gegenüber dem Stand der Technik aus und liefert zudem trotz Rückführung des Extraktwassers eine hohe Qualität für PA6 POY-Filamente. Durch die moderaten Temperaturen wird offensichtlich das Polymer nicht geschädigt.

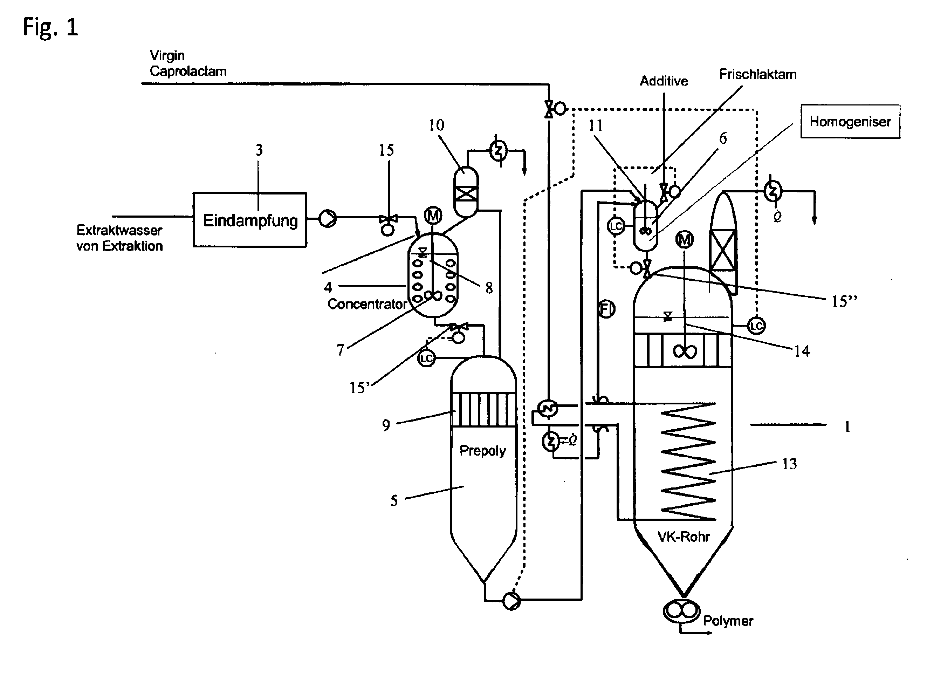

Die Erfindung wird nachfolgend näher anhand der Figur 1 beschrieben.

In der Figur 1 ist eine Ausführung der erfindungsgemäßen Vorrichtung dargestellt, bei der die Rückgewinnungslinie durch eine Eindampfvorrichtung 3, einer Re-Polymerisationsstufe bestehend aus einem Druckreaktor 4, einem zweiten Druckreaktor 5 sowie einer Mischvorrichtung 6 gebildet ist, die allesamt direkt hintereinander geschaltet sind. Das aus einer Extraktionsvorrichtung stammende Extraktwasser weist im Beispielsfall einen Wassergehalt von 90 % auf. Die Eindampfvorrichtung die gemäß der Ausführungsform nach Figur 1 als Fallfilm-Einheit ausgebildet ist, dampft das Extraktwasser bis auf einen Gehalt von 30 % Wasser und 70 % Lactam und Oligomere ein. Aus der Mengenbilanz, wenn das Extraktwasser von 3 Prozesslinien in eine Linie geführt wird, ergibt sich ein Oligomerenanteil von 4.9 % im aufkonzentrierten Extraktwasser bzw. 7.0 % in der organischen Substanz ein.

Das aus dieser ersten Eindampfstufe kommende Extraktwasser weist eine Temperatur am Ausgang der Eindampfvorrichtung von etwa 120° bis 125 C auf. Über einen Strömungsregler 15 wird dann das Extraktwasser in den ersten Druckreaktor 4 geführt. Der Druckreaktor 4 ist als zylindrischer Druckbehälter ausgebildet. Günstige Reaktionsbedingungen in dem ersten Druckreaktor sind dabei eine Temperatur von 225 bis 245° C, ein Druck von 4,0 bar und eine Behandlungsdauer von 5 Stunden. Die Temperatur im ersten Druckreaktor 4 wird dabei durch eine Innenraumrohrheizung 7 eingestellt. Zur Vergleichmäßigung der Mischung (Extraktwasser und sich bildendes Prepolymer) und Einbringung der Verdampfungswärme ist ein Rührelement 8 vorgesehen. Über einen Strömungsregler 15' wird dann nach Abschluss der Behandlungsdauer in der zweiten Stufe, d.h. im Druckreaktor 4 das Prepolymer in den Kopf des zweiten Druckreaktor 5 geführt. Im zweiten Druckreaktor 5 werden günstigerweise wiederum 4,0 bar eingestellt. Die Temperatur liegt zwischen 250 am Reaktorkopf und 260° C am Ausgang und die Behandlungsdauer bei 11 Stunden. Die Behandlungsdauer wird dabei so geführt, dass das Prepolymer am Ausgang des Druckreaktors 5 einen Oligomerenanteil von max. 1,5 % aufweist. Zur sicheren Betriebsweise der beiden Druckreaktoren 4, 5 ist eine Rektifikationskolonne 10 vorgesehen. Die Kolonne 10 ist bevorzugt so angeordnet, dass diese mit beiden Druckreaktoren 4, 5 gleichzeitig verbunden ist, sodass geringe Investitionskosten entstehen. Zu einer Vergleichmäßigung der Behandlung ist vorteilhafterweise noch vorgesehen, dass der zweite Druckreaktor oben einen Krawattenwärmeaustauscher 9 aufweist sowie mehrere darunterliegende Strömungseinbauten.

Das Prepolymer, das dem zweiten Druckreaktor 5 am konisch zulaufenden Boden entnommen wird, wird dann in die Mischvorrichtung 6 überführt. Die Mischvorrichtung verfügt gleichzeitig über einen Zugang für Frischlactam, sodass das Frischlactam mit dem Extraktwasser vermischt werden kann. Das Mischungsverhältnis wird so eingestellt, dass ein Restoligomerengehalt in der Mischvorrichtung 6 von max. 0,45 %, insbesondere von 0,40 entsteht. Im vorliegenden Falle wird somit knapp mehr als die dreifache Menge an Frischlactam zugemischt. Die Mischvorrichtung kann als Mixingtank oder als statisches Mischersystem mit mind. einem Mischer ausgebildet sein. Die Mischvorrichtung ist beheizt und führt zu kurzen Verweilzeiten im Bereich von 20 bis 40 Minuten. Vorteilhafterweise wird das Frischlactam (Virgin Carpolactam in der Figur 1) bevor es in die Mischvorrichtung 6 überführt wird, auf eine Temperatur von 220 bis 230 vorgeheizt. Auf diese Weise ist der Temperaturunterschied der einzelnen Komponenten, die in der Mischvorrichtung zusammengemischt werden, nicht so groß. Das Prepolymer, das den zweiten Druckreaktor 5 verlässt, besitzt nämlich üblicherweise eine Temperatur von 250 bis 260° C. Aufgrund der geringen Temperaturunterschiede sind die Risiken des plötzlichen Verdampfens des Restwassers ("Flashing") und des Einfrieren des Produktstroms weitgehend beseitigt.

Der Boden der Mischvorrichtung 6, die die letzte Stufe der Repolymerisationsstufe darstellt, ist nun - zwecks Druckregelung - kopfseitig mit dem Polymerisationsreaktor 1 verbunden. Der Polymerisationsreaktor 1 ist als sogenanntes VK-Rohr ausgebildet. Das VK-Rohr kann dabei drucklos oder auch als Druckstufe ausgebildet sein. Die Polykondensation im VK-Rohr-Kopf erfolgt bei 240 bis 260° C und bei einem Druck im Kopf des VK-Rohrs von 1,05 bis 1.10 bar. Die Reaktionsdauer beträgt von 18 bis 20 Stunden.

Das Polyamid, das das VK-Rohr 1 am konischen Boden verlässt, besitzt eine Temperatur von 242 bis 246° C und weist lediglich einen Oligomerenanteil von kleiner oder gleich 0,65 % auf. Derartige Polyamide sind ausgezeichnet geeignet zur Herstellung von hochwertigen Produkten wie textilen POY-Filamenten.

Wie aus der Figur 1 hervorgeht, ist das VK-Rohr 1 mit einem Rührelement 14A und mit einer innen liegenden Heizung (Robertsverdampfer) 14B, sowie einer Polymerkühlung 13, bei der das Polymer langsam abgekühlt wird, versehen.

Am Kopf des VK-Rohres 1 ist eine Rektifikationskolonne 12 angeordnet. In dieser Kolonne werden die aus dem VK-Rohr abgezogenen Dämpfe rektifiziert und dann dem technischen Abwasser zugeführt.

## Patentansprüche

1. Verfahren zur kontinuierlichen Herstellung von Polyamid 6 aus ε-Caprolactam (Frischlactam) unter Verwendung von Oligomeren enthaltendem Rücklactam aus mindestens einer Extraktionsstufe mit folgenden Schritten:
a) dass das Extraktwasser in mindestens einer ersten Stufe bis zu einem Wasseranteil von maximal 35 Gew.-% aufkonzentriert wird,
b) dass in mindestens einer zweiten Stufe bei einem Druck von 3 bis 8 bar und einer Temperatur von 225 bis 255 °C über eine Zeitspanne von 3 bis 6 Stunden die Mischung aus der ersten Stufe a) behandelt wird,
c) dass die aus der mindestens einen zweiten Stufe b) erhaltene Mischung in mindestens einer dritten Stufe bei 240 bis 265 °C und einem Druck von 3 bis 8 bar über eine Zeitspanne von 8 bis 14 Stunden, behandelt wird bis ein Oligomerenanteil der Mischung auf maximal 1,8 Gew.-% reduziert wird,
d) dass die aus der mindestens einer dritten Stufe c) erhaltene Mischung in mindestens einer weiteren Stufe mit Frischlactam vermischt wird bis ein Oligomerenanteil der Mischung von maximal 0,7 Gew.-% erreicht ist und
e) dass diese Mischung einem VK-Rohr zugeführt wird, um Polyamid 6 durch Polykondensation zu erhalten.

2. Verfahren nach Anspruch 1, **dadurch gekennzeichnet, dass** in der ersten Stufe a) ein Extraktwasser mit einem Wasseranteil von 88 bis 92 Gew.-% zugeführt wird.

3. Verfahren nach Anspruch 1 oder 2,
**dadurch gekennzeichnet, dass** in der ersten Stufe a) das Extraktwasser bis zu einem Wasseranteil von 25-30 %, insbesondere bei Temperaturen von 110 bis 130°C, aufkonzentriert wird.

4. Verfahren nach mindestens einem der Ansprüche 1 bis 3, **dadurch gekennzeichnet, dass** in der zweiten Stufe b) mit einem Druck von 4 bis 6 bar und einer Temperatur von 230 bis 240 °C und einer Behandlungsdauer von 4 bis 5 Std. gearbeitet wird.

5. Verfahren nach mindestens einem der Ansprüche 1 bis 4, **dadurch gekennzeichnet, dass** in der dritten Stufe c) bei einer Temperatur von 250 bis 260 °C und einem Druck von 4 bis 6 bar und einer Zeitdauer von 10 bis 12 Std. gearbeitet wird bis der Oligomerenanteil der Mischung auf maximal 1,6 Gew.-%, insbesondere 1,3 bis 1,5 Gew.-% reduziert wird.

6. Verfahren nach mindestens einem der Ansprüche 1 bis 5,
**dadurch gekennzeichnet, dass** in der Stufe d) so viel Frischlactam zugesetzt wird bis ein Oligomerenanteil der Mischung von maximal 0,6 Gew.-%, insbesondere maximal 0,5 Gew.-% erreicht ist.

7. Verfahren nach mindestens einem der Ansprüche 1 bis 6, **dadurch gekennzeichnet, dass** in der Stufe d) eine Temperatur von 225 bis 235 °C und ein Druck von 1,5 bis 3,5 bar sowie eine Behandlungsdauer von 20 bis 40 Minuten eingehalten wird.

8. Verfahren nach mindestens einem der Ansprüche 1 bis 7, **dadurch gekennzeichnet, dass** das in Stufe d) zugeführte Frischlactam auf eine Temperatur von 220 bis 230 °C vorgewärmt wird.

9. Verfahren nach mindestens einem der Ansprüche 1 bis 8, **dadurch gekennzeichnet, dass** die Polykondensation in Stufe e) bei einer Temperatur von 230 bis 280 °C über eine Zeitspanne von 16 bis 22 Std. durchgeführt wird.

10. Verfahren nach mindestens einem der Ansprüche 1 bis 9, **dadurch gekennzeichnet, dass** in Stufe e) die Polykondensation in einem einstufigem VK-Rohr durchgeführt wird.

11. Verfahren nach mindestens einem der Ansprüche 1 bis 10, **dadurch gekennzeichnet, dass** das in Stufe e) nach der Polykondensation erhaltene Polyamid 6 einen Oligomerenanteil von maximal 0,8 Gew.-%, insbesondere von maximal 0.65 Gew.-% aufweist.

12. Verfahren nach mindestens einem der Ansprüche 1 bis 11, **dadurch gekennzeichnet, dass** das in Stufe e) erzeugte Polyamid 6 in einem Granulator granuliert wird, einer Extraktionskolonne (extraction tower) zugeführt und mit heißem demineralisiertem Wasser das Extrakt aus dem Granulat ausgewaschen wird, wobei das bei diesem Extraktionsprozess anfallende Extraktwasser anschließend der Stufe a) zugeführt wird.

13. Verwendung eines Polyamid 6, das nach mindestens einem der Ansprüche 1 bis 12 hergestellt worden ist, für Standard POY-Flamenten.

14. Vorrichtung zur Durchführung eines Verfahrens nach mindestens einem der Ansprüche 1 bis 12 umfassend ein VK-Rohr (1) dem in Prozessrichtung eine Repolymerisationsstufe (2) vorgeschaltet ist, **dadurch gekennzeichnet dass** die Repolymerisationsstufe aufeinanderfolgend in Prozessrichtung mindestens eine Eindampfvorrichtung (3), mindestens einen ersten Druckreaktor (4) und mindestens einen zweiten Druckreaktor (5) sowie eine zwischen dem zweiten Druckreaktor (5) und dem VK-Rohr angeordnete Mischvorrichtung (6) aufweist.

15. Vorrichtung nach Anspruch 14, **dadurch gekennzeichnet, dass** der erste Druckreaktor(4) als zylindrischer Druckbehälter ausgebildet ist und eine innenliegende Heizelement (7) sowie ein Rührelement (8) aufweist.

16. Vorrichtung nach mindestens einem der Ansprüche 14 oder 15, **dadurch gekennzeichnet, dass** der zweite Druckreaktor (5) als zylindrischer Druckbehälter ausgebildet ist und Strömungseinbauten (9) für eine Vergleichmäßigung der Verweilzeit aufweist.

17. Vorrichtung nach mindestens einem der Ansprüche 14 bis 16, **dadurch gekennzeichnet, dass** der erste und/oder der zweite Druckreaktor (4, 5) mit einer Rektifikationskolonne (10) verbunden ist.

18. Vorrichtung nach mindestens einem der Ansprüche 14 bis 17, **dadurch gekennzeichnet, dass** der erste Druckreaktor (4) direkt mit dem zweiten Druckreaktor (5) verbunden ist.

19. Vorrichtung nach mindestens einem der Ansprüche 14 bis 18, **dadurch gekennzeichnet, dass** die Mischvorrichtung (6) mindestens ein Mischelement (1) aufweist und beheizbar ist.

20. Vorrichtung nach mindestens einem der Ansprüche 14 bis 19, **dadurch gekennzeichnet, dass** das VK-Rohr kopfseitig mit einer Rektifikationskolonne (12) verbunden ist.

21. Vorrichtung nach mindestens einem der Ansprüche 14 bis 20, **dadurch gekennzeichnet, dass** das VK-Rohr (1) innenliegende Heizelemente (14B) und Kühlelemente (13) und/oder Rührelemente (14) aufweist.

## Claims

1. Method for continuous production of polyamide 6 from ε-caprolactam (virgin lactam) using oligomers comprising residual lactam from at least one extraction stage having the following steps:
a) that the extract water is concentrated, in at least one first step, up to a water proportion of at most 35% by weight,
b) that, in at least one second step, at a pressure of 3 to 8 bar and a temperature of 225 to 255°C, the mixture from the first step a) is treated over a time span of 3 to 6 hours,
c) that the mixture obtained from the at least one second step b) is treated, in at least one third step, at 240 to 265°C and a pressure of 3 to 8 bar over a time span of 8 to 14 hours until an oligomer proportion of the mixture is reduced to at most 1.8% by weight,
d) that the mixture obtained from the at least one third step c) is mixed with virgin lactam in at least one further step until an oligomer proportion of the mixture of at most 0.7% by weight is reached and
e) that this mixture is supplied to a precondensation pipe in order to obtain polyamide 6 by polycondensation.

2. Method according to claim 1, **characterised in that**, in the first step a), an extract water with a water proportion of 88 to 92% by weight is supplied.

3. Method according to claim 1 or 2, **characterised in that**, in the first step a), the extract water is concentrated up to a water proportion of 25 - 30%, in particular at temperatures of 110 to 130°C.

4. Method according to at least one of the claims 1 to 3, **characterised in that**, in the second step b), the process takes place at a pressure of 4 to 6 bar and a temperature of 230 to 240°C and with a treatment duration of 4 to 5 hours.

5. Method according to at least one of the claims 1 to 4, **characterised in that**, in the third step c), the process takes place at a temperature of 250 to 260°C and a pressure of 4 to 6 bar and with a time duration of 10 to 12 hours until the oligomer proportion of the mixture is reduced to at most 1.6% by weight, in particular 1.3 to 1.5% by weight.

6. Method according to at least one of the claims 1 to 5, **characterised in that**, in step d), enough virgin lactam is added until an oligomer proportion of the mixture of at most 0.6% by weight, in particular at most 0.5% by weight, is reached.

7. Method according to at least one of the claims 1 to 6, **characterised in that**, in step d), a temperature of 225 to 235°C and a pressure of 1.5 to 3.5 bar and also a treatment duration of 20 to 40 minutes is maintained.

8. Method according to at least one of the claims 1 to 7, **characterised in that** the virgin lactam supplied in step d) is preheated to a temperature of 220 to 230°C.

9. Method according to at least one of the claims 1 to 8, **characterised in that** the polycondensation in step e) is implemented at a temperature of 230 to 280°C over a time span of 16 to 22 hours.

10. Method according to at least one of the claims 1 to 9, **characterised in that**, in step e), the polycondensation is implemented in a one-step precondensation pipe.

11. Method according to at least one of the claims 1 to 10, **characterised in that** the polyamide 6 obtained in step e) after the polycondensation has an oligomer proportion of at most 0.8% by weight, in particular of at most 0.65% by weight.

12. Method according to at least one of the claims 1 to 11, **characterised in that** the polyamide 6 produced in step e) is granulated in a granulator, supplied to an extraction column (extraction tower) and the extract is washed out of the granulate with hot dermineralised water, the extract water produced during this extraction process subsequently being supplied to step a).

13. Use of a polyamide 6 which was produced according to at least one of the claims 1 to 12 for standard POY filaments.

14. Device for implementing a method according to at least one of the claims 1 to 12, comprising a precondensation pipe (1) which is preceded in the process direction by a repolymerisation step (2), **characterised in that** the repolymerisation step, in succession in the process direction, has at least one evaporation device (3), at least one first pressure reactor (4) and at least one second pressure reactor (5) and also a mixing device (6) disposed between the second pressure reactor (5) and the precondensation pipe.

15. Device according to claim 14, **characterised in that** the first pressure reactor (4) is configured as a cylindrical pressure container and has an internal heating element (7) and also an agitation element (8).

16. Device according to at least one of the claims 14 or 15, **characterised in that** the second pressure reactor (5) is configured as a cylindrical pressure container and has flow baffles (9) for equalisation of the dwell time.

17. Device according to at least one of the claims 14 to 16, **characterised in that** the first and/or the second pressure reactor (4, 5) is connected to a rectification column (10).

18. Device according to at least one of the claims 14 to 17, **characterised in that** the first pressure reactor (4) is connected directly to the second pressure reactor (5).

19. Device according to at least one of the claims 14 to 18, **characterised in that** the mixing device (6) has at least one mixing element (1) and is heatable.

20. Device according to at least one of the claims 14 to 19, **characterised in that** the precondensation pipe is connected at the top to a rectification column (12).

21. Device according to at least one of the claims 14 to 20, **characterised in that** the precondensation pipe (1) has interval heating elements (14B) and cooling elements (13) and/or agitation elements (14).

## Revendications

1. Procédé de préparation en continu de polyamide 6 à partir d'ε-caprolactame(lactame frais) par utilisation de lactame recyclé contenant des oligomères, comportant au moins une étape d'extraction comprenant les étapes suivantes :
a) l'eau d'extraction est, dans au moins une première étape, concentrée jusqu'à une teneur maximale en eau de 35 % en poids,
b) dans au moins une deuxième étape, sous une pression de 3 à 8 bar et à une température de 225 à 255°C, on traite le mélange sortant de la première étape a) durant un laps de temps de 3 à 6 heures,
c) le mélange obtenu lors de la/des deuxième(s) étape(s) est traité dans au moins une troisième étape à une température allant de 240 à 265°C et sous une pression de 3 à 8 bar pendant un laps de temps de 8 à 14 heures, jusqu'à ce que la teneur du mélange en oligomères soit réduite à une valeur maximale de 1,8 % en poids,
d) le mélange obtenu lors de la/des troisième(s) étape(s) c) est, à au moins une étape supplémentaire, mélangé à du lactame frais, jusqu'à arriver à une teneur du mélange en oligomères au maximum de 0,7 % en poids, et
e) le mélange est envoyé dans un tube de condensation vertical, pour donner du polyamide 6 par polycondensation.

2. Procédé selon la revendication 1, **caractérisé en ce que**, à la première étape a), on amène une eau d'extraction ayant une teneur en eau de 88 à 92 % en poids.

3. Procédé selon les revendications 1 ou 2, **caractérisé en ce que**, lors de la première étape a), l'eau d'extraction est concentrée jusqu'à une teneur en eau de 25 à 30 %, en particulier à des températures de 110 à 130°C.

4. Procédé selon au moins l'une des revendications 1 à 3, **caractérisé en ce que**, lors de la deuxième étape b), on travaille sous une pression de 4 à 6 bar et à une température de 230 à 240°C pour une durée de traitement de 4 à 5 heures.

5. Procédé selon au moins l'une des revendications 1 à 4, **caractérisé en ce que**, à la troisième étape c), on travaille à une température de 250 à 260°C et sous une pression de 4 à 6 bar et pendant un laps de temps de 10 à 12 heures, jusqu'à ce que la teneur du mélange en oligomères soit réduite à une valeur maximale de 1,6 % en poids, en particulier de 1,3 à 1,5 % en poids.

6. Procédé selon au moins l'une des revendications 1 à 5, **caractérisé en ce que**, à l'étape d), on ajoute une quantité de lactame frais suffisante pour atteindre une teneur du mélange en oligomères au maximum de 0,6 % en poids, en particulier au maximum de 0,5 % en poids.

7. Procédé selon au moins l'une des revendications 1 à 6, **caractérisé en ce que**, à l'étape d), on respecte une température de 225 à 235°C et une pression de 1,5 à 3,5 bar, ainsi qu'une durée de traitement de 20 à 40 minutes.

8. Procédé selon au moins l'une des revendications 1 à 7, **caractérisé en ce que** le lactame frais amené à l'étape d) est préchauffé à une température de 220 à 230°C.

9. Procédé selon au moins l'une des revendications 1 à 8, **caractérisé en ce que** la polycondensation de l'étape e) est mise en oeuvre à une température de 230 à 280°C sur un laps de temps de 16 à 22 heures.

10. Procédé selon au moins l'une des revendications 1 à 9, **caractérisé en ce que**, à l'étape e), la polycondensation est mise en oeuvre dans un tube de condensation vertical à un étage.

11. Procédé selon au moins l'une des revendications 1 à 10, **caractérisé en ce que** le polyamide 6 obtenu à l'étape e) après la polycondensation présente une teneur en oligomères au maximum de 0,8 % en poids, en particulier au maximum de 0,65 % en poids.

12. Procédé selon au moins l'une des revendications 1 à 11, **caractérisé en ce que** le polyamide 6 produit à l'étape e) est granulé dans un granulateur, envoyé à une colonne d'extraction (tour d'extraction) et l'extrait est débarrassé du granulat par lavage avec de l'eau chaude déminéralisée, l'eau d'extraction obtenue lors de cette opération d'extraction étant ensuite envoyée à l'étape a).

13. Utilisation d'un polyamide 6 qui a été préparé conformément à au moins l'une des revendications 1 à 12, pour des filaments POY standard.

14. Dispositif pour la mise en oeuvre d'un procédé selon au moins l'une des revendications 1 à 12, comprenant un tube de condensation vertical (1), en amont duquel, dans la direction du procédé, on procède à une étape de repolymérisation (2), **caractérisé en ce que** l'étape de repolymérisation présente, successivement dans la direction du procédé, au moins un dispositif d'évaporation (3), au moins un premier réacteur sous pression (4) et au moins un deuxième réacteur sous pression (5), ainsi qu'un dispositif mélangeur (6) disposé entre le deuxième réacteur sous pression (5) et le tube de condensation vertical.

15. Dispositif selon la revendication 14, **caractérisé en ce que** le premier réacteur sous pression (4) est configuré comme un réacteur sous pression cylindrique, et comprend un élément chauffant intérieur (7), ainsi qu'un élément agitateur (8).

16. Dispositif selon au moins l'une des revendications 14 ou 15, **caractérisé en ce que** le deuxième réacteur sous pression (5) est configuré comme un réacteur sous pression cylindrique, et comprend des éléments internes (9) pour assurer l'homogénéité du temps de séjour.

17. Dispositif selon au moins l'une des revendications 14 à 16, **caractérisé en ce que** le premier et/ou le deuxième réacteur sous pression (4, 5) sont reliés à une colonne de rectification (10).

18. Dispositif selon au moins l'une des revendications 14 à 17, **caractérisé en ce que** le premier réacteur sous pression (4) est directement relié au deuxième réacteur sous pression (5).

19. Dispositif selon au moins l'une des revendications 14 à 18, **caractérisé en ce que** le dispositif mélangeur (6) comprend au moins un élément mélangeur (1), et est chauffable.

20. Dispositif selon au moins l'une des revendications 14 à 19, **caractérisé en ce que** le tube de condensation vertical est en tête relié à une colonne de rectification (12).

21. Dispositif selon au moins l'une des revendications 14 à 20, **caractérisé en ce que** le tube de condensation vertical (1) comprend des éléments chauffants internes (14B) et des éléments de refroidissement (13) et/ou des éléments agitateurs (14).
